(19) Europäisches Patentamt
European Patent Office
Office européen des brevets

(11) **EP 4 549 989 A1**

(12) **EUROPEAN PATENT APPLICATION**

(43) Date of publication:
**07.05.2025 Bulletin 2025/19**

(21) Application number: **23206794.2**

(22) Date of filing: **30.10.2023**

(51) International Patent Classification (IPC):
**G01S 7/02** *(2006.01)*   **G01S 13/931** *(2020.01)*
**G01S 7/35** *(2006.01)*   **G01S 13/34** *(2006.01)*
**G01S 13/42** *(2006.01)*   **G01S 13/58** *(2006.01)*

(52) Cooperative Patent Classification (CPC):
**G01S 7/023; G01S 7/354; G01S 13/343;**
**G01S 13/931;** G01S 13/42; G01S 13/584

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **GM Cruise Holdings LLC**
**San Francisco, CA 94107 (US)**

(72) Inventors:
• **SANSON, Jessica Bartholdy**
  **85521 Ottobrunn (DE)**
• **GÜTLEIN-HOLZER, Johanna**
  **85521 Ottobrunn (DE)**
• **JÁCOME MUÑOZ, Jorge Julio**
  **85521 Ottobrunn (DE)**
• **GIERE, Andre**
  **85521 Ottobrunn (DE)**

(74) Representative: **Berkenbrink, Kai-Oliver et al**
**Patentanwälte Becker & Müller**
**Turmstrasse 22**
**40878 Ratingen (DE)**

(54) **ADC INTERFERENCE CANCELATION BY TEMPORAL FILTER**

(57)     A radar sensor system comprises a receive antenna that receives a radar return and circuitry configured to perform certain acts. The acts comprise receiving analog-to-digital converted (ADC) samples of a received radar signal and identifying power magnitudes for the ADC samples. The acts also comprise calculating a mean power value for ADC samples in a given ramp of the received radar signal and calculating a mean power variance of the ADC samples in the given ramp. The acts further comprise identifying a sample having a power magnitude above a power threshold. Additionally, the acts comprise adjusting the power magnitude of the identified sample to mitigate the interference effect caused by the identified sample.

FIG. 5

**EP 4 549 989 A1**

**Description**

BACKGROUND

Autonomous or assisted driving strategies have been facilitated through sensing an environment around a vehicle. Radar sensors are conventionally used in connection with detecting and classifying objects in an environment; advantages of radar over other types of sensors include robustness in regard to lighting and weather conditions. Often, radar sensors are deployed with cameras and/or lidar sensors to provide different modes of detection and redundancy. In certain scenarios, performance of lidar and/or cameras is negatively impacted by environmental features, such as fog, rain, snow, bright sunlight, lack of adequate light, etc. Accordingly, in these scenarios, radar is relied heavily upon to detect and classify objects in the environment, while lidar and camera sensors are less heavily relied upon.

Conventionally, a radar sensor generates a radar tensor, and the radar tensor is processed to detect and classify objects in the environment. For instance, the radar tensor includes power measurements generated by the radar sensor along different dimensions, such as Doppler, range, azimuth, and elevation. The radar tensor is then further processed to detect, classify, and track objects in the scene over time. As radar sensor systems increase in popularity and are included in more and more vehicles, accurate tracking of moving objects becomes ever more important. False-positive detections are problematic, and at the same time, real objects need to be accurately and reliably detected and tracked.

In connection with navigating an environment, an autonomous vehicle perceives objects surrounding the autonomous vehicle based upon sensor signals generated by sensor systems of the autonomous vehicle. For example, the autonomous vehicle may include a sensor system, such as a radar sensor system, for generating sensor signals. The autonomous vehicle also includes a centralized processing device that receives data based upon sensor signals generated by the sensor system and performs a variety of different tasks, such as detection of vehicles, pedestrians, and other objects. Based on an output of the processing device, the autonomous vehicle may perform a driving maneuver.

Radar sensor systems exhibit some advantages over other sensor systems such as lidar sensor systems and cameras with respect to their usage in autonomous vehicles. For instance, performance of radar sensor systems is more invariant to weather changes, such that data generated by a radar sensor system can be used to enable autonomous driving under certain weather conditions (such as heavy rain or snow). In addition, radar sensor systems are able to capture velocity information nearly instantaneously.

Radar sensor systems emit radar signals into a surrounding environment. The radar sensor signals reflect off objects in the environment and the radar sensor system then detects the reflected radar signals. Conventionally, the radar sensor system is configured to construct data tensors based upon the reflected radar signals, where a data tensor has bins across several dimensions. Example dimensions include range, doppler, and beam. The radar sensor system then generates point clouds based upon the data tensors and transmits the point clouds to the centralized processing device, where the centralized processing device identifies objects in the environment of the autonomous vehicle based upon the point clouds.

Range resolution of a radar sensor system is a function of the bandwidth of a radar signal transmitted by the radar sensor system. All else being equal, employing a wider bandwidth radar signal to be transmitted by the radar sensor system generally provides a finer range resolution (as compared to range resolution provided by a radar sensor system that utilizes a narrower bandwidth radar signal). In various applications, such as radar sensor systems of vehicles (e.g., autonomous vehicles), it is desired to have relatively fine range resolution; thus, such systems commonly employ relatively wide bandwidth radar signals.

When multiple radar sensor systems are operating in the same environment, it is possible for a first radar sensor to receive a radar signal transmitted by a second radar sensor in addition to the first radar sensor's own radar signal. The second radar sensor's radar signal interferes with the first radar sensor's radar signal, resulting in a larger than expected power reading that can cause a false detection.

Conventional approaches have not satisfactorily addressed problems caused by interference between radar signals from different radar sensor systems.

SUMMARY

The following is a brief summary of subject matter that is described in greater detail herein. This summary is not intended to be limiting as to the scope of the claims.

Described herein are various technologies relating to radar sensor systems, and more specifically, radar sensor systems employed in autonomous vehicles, aircrafts, watercrafts, and the like. With more particularity, various technologies described herein facilitate mitigating interference in a radar sensor system by identifying and compensating for radar signal samples that have been affected by interference.

According to an aspect, a received radar signal is sampled by an analog-to-digital converter (ADC). The samples are analyzed to identify samples affected by interference (e.g., caused by a radar signal from another radar sensor system, etc.). The identified samples are then removed or adjusted before processing the radar signal, thereby preventing the interference from being spread throughout the radar spectrum and compromising the noise level and the false detection rate. The described technique is implemented after the ADC sampling stage, in the raw signal.

Samples affected by interference can compromise the performance of the radar sensor system and have a much higher signal magnitude than the rest of the signal samples. In order to filter out the affected samples, the mean power variance of each frame's ADC signal is calculated. Signal samples having a power magnitude much greater (i.e., above a predetermined power threshold) than the mean power variance of the frame in which the sample is taken are removed or adjusted. For instance a power threshold based on the mean power variance for the frame can be employed to mitigate loss of radar performance. Using signal variance instead of absolute magnitude to filter affected samples from the signal mitigates the problem of inadvertently filtering out samples compromised by saturation or reflections from close and/or strong targets.

According to another aspect, the received radar signal is sampled by an ADC, and each sample's power magnitude is acquired. Mean ADC sample power is calculated for each ramp in the signal by averaging the power magnitudes of the samples in the ramp. Mean power variance is calculated on a ramp-by-ramp basis or a frame-by-frame basis. For example, the mean power variance can be calculated as the average of the absolute values of the difference between the absolute value of each ADC sample power magnitude and the mean ADC sample power. In another embodiment, rather than the absolute value of each ADC sample magnitude, the real value or the squared value of each ADC sample magnitude can be used. Samples having a power magnitude greater than a power threshold are identified as having been subjected to interference. The power threshold can be a multiple of the calculated mean power variance (e.g., 1.5x, 2x, 2.5x, 3x, 4x, etc., the mean power variance). The power magnitudes of the identified samples are adjusted to mitigate the effect of the interference. For example, the power magnitude of an identified sample can be multiplied by zero to negate the interference effect of the identified sample prior to point cloud processing. In this manner, interference mitigation is performed on the raw radar data to mitigate the effects of samples that have been subjected to interference (e.g., caused by interfering radar signals from another radar sensor system or the like).

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

BRIEF DESCRIPTION OF THE DRAWINGS

Fig. 1 is a functional block diagram of an exemplary radar sensor.
Fig. 2 illustrates a more detailed view of the hardware logic component.
Fig. 3 shows another example of a radar sensor.
Fig. 4 illustrates a methodology for mitigating interference when generating a radar point cloud.
Fig. 5 illustrates a methodology for mitigating interference raw radar signal data.
Fig. 6 illustrates a plurality of interfered ramps and a non-interfered ramp.
Fig. 7 illustrates a graphical representation of power magnitude across ADC samples.
Fig. 8 is a functional block diagram of an exemplary AV.
Fig. 9 is an exemplary computing system.

DETAILED DESCRIPTION

Various technologies pertaining to autonomous vehicle (and other) radar sensor systems are described herein. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean serving as an illustration or example of something and is not intended to indicate a preference.

Interference between radars is a problem in the autonomous driving sector. Interference can significantly affect the performance of a radar sensor system, especially the false positive and false negative rate. For example, interference can cause false detections or increase the noise level causing the radar sensor system to miss real detections. Interference between frequency modulated continuous wave (FMCW) radar sensor systems that do not have the same ramp slope or pulse repetition interval (PRI) usually occurs in just a few samples of the signal (in the short part of the time during the transmission of a frame). However, when this interference occurs in a direct line at short distances, even just a few samples that suffer interference can have a large impact on the performance of the radar sensor system. The radar sensor system's signal processing can cause the few interference-compromised samples to be scattered throughout the radar spectrum, which in turn causes the noise level to increase considerably, thereby decreasing the maximum detection range and potentially generating an increase in false detections.

Due to the relatively small bandwidth used for FMCW radar sensor systems, interference can be caused when two FMCW radar sensor systems transmit concurrently in the same bandwidth. This type of interference can affect relatively few samples of a signal received in a radar return. By filtering out the affected samples, the interference effect can be mitigated.

According to aspects described herein, interference-compromised signal samples are identified and removed prior to signal processing. A low-cost, efficient processing technique is provided that analyzes the power variance of the analog-to-digital conversion (ADC) signal to identify time samples having a power magnitude greater than the average variance of the signal in a radar frame. Identified samples can be removed, adjusted, or have their power attenuated to mitigate the interference effect.

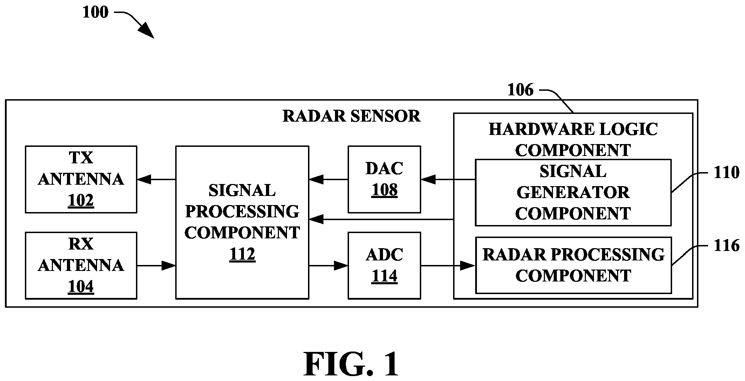

With reference now to Fig. 1, an exemplary radar sensor system (also referred to as a radar sensor) 100 is illustrated, in which various features, circuits, etc. described herein can be employed. The radar sensor 100 includes a transmit antenna 102, a receive antenna 104, and a hardware logic component 106. Briefly, the hardware logic component 106 is configured to prepare radar signals that are transmitted by the transmit antenna 102, and to compute target solutions indicating estimated positions and/or velocities of objects based upon radar returns and/or other radar signals received by the receive antenna 104. In exemplary embodiments, various components of the radar sensor 100 can be integrated as a same system-on-a-chip (SoC). In various embodiments, the radar sensor 100 can be employed on a vehicle, such as a land vehicle, an aircraft, to identify positions and velocities of objects in the operational environment of the vehicle.

The radar sensor 100 further comprises one or more DACs 108. The hardware logic component 106 comprises a signal generator component 110 that prepares radar signals for transmission by way of the transmit antenna 102. The signal generator component 110 is configured to control the DAC 108 to cause the DAC 108 to generate an analog radar signal for transmission by the transmit antenna 102. In other words, the signal generator component 110 generates digital values that, when received by the DAC 108, cause the DAC 108 to output an analog radar signal having various desired signal characteristics. Hence, the radar sensor 100 is configured as a digitally modulated radar sensor, wherein characteristics of radar signals output by the transmit antenna 102 are digitally controlled by the signal generator component 110 of the hardware logic component 106. For example, the signal generator component 110 can be configured to control the DAC 108 such that the radar sensor operates as a frequency modulated continuous wave (FMCW) radar sensor, etc.

The radar sensor 100 further includes an analog signal processing component 112. The signal processing component 112 is generally configured to perform various analog signal processing operations on analog signals that are to be output by the transmit antenna 102 and/or that are received by the receive antenna 104. By way of example, and not limitation, the signal processing component 112 can amplify a radar signal output by the DAC 108 to increase the power of the radar signal prior to transmission by way of the transmit antenna 102. In a further example, the signal processing component 112 can be configured to mix a radar signal output by the DAC 108 with a carrier signal to shift a center frequency of the radar signal. The signal processing component 112 can include any of various components that are configured to perform these various functions. For example, the signal processing component 112 can include mixers, amplifiers, filters, or the like. Functionality of the signal processing component 112 and its constituent components can be controlled by the hardware logic component 106. The transmit antenna 102 receives processed radar signals from the signal processing component 112 and emits the radar signals into an operational environment of the radar sensor 100.

The receive antenna 104 receives radar returns from the operational environment. In exemplary embodiments, the radar returns received by the receive antenna 104 comprise reflections, from objects in the operational environment of the sensor 100, of radar signals emitted by the transmit antenna 102. It is to be understood that the radar returns received by the receive antenna 104 can further include reflections of radar signals emitted by other radar emitters that are active within the operational environment of the radar sensor 100. Responsive to receipt of radar returns from the operational environment of the sensor 100, the receive antenna 104 outputs an electrical signal that is indicative of the received radar returns. This electrical signal is referred to herein as a radar signal and is transmitted along one or more transmission lines in the radar sensor 100, as distinct from radar returns that are received by the receive antenna 104 as radiated signals propagating through air or free space in the operational environment of the radar sensor 100.

The signal processing component 112 receives a radar signal from the receive antenna 104. The signal processing component 112 is configured to perform various analog signal processing operations over radar signals received from the receive antenna 104. By way of example, and not limitation, the signal processing component 112 can perform various mixing, filtering, and amplification operations on radar signals output by the receive antenna 104. The signal processing component 112 can be configured to perform various of these signal processing operations (e.g., mixing) based further upon a radar signal transmitted by the transmit antenna 102.

The radar sensor 100 further comprises one or more ADCs 114 that receives a processed radar signal from the signal processing component 112. The ADC 114 digitally samples the radar signal and outputs digital values that are indicative of amplitude of the radar signal over time. These digital values are collectively referred to herein as radar data. The radar data output by the ADC 114 are indicative of the radar returns received by the receive antenna 104.

The hardware logic component 106 receives the radar data from the ADC 114. The hardware logic component 106 further comprises a radar processing component 116. The radar processing component 116 is configured to compute positions and/or velocities of targets in the operational environment of the radar sensor 100 based upon the radar data. In a non-limiting example, the radar processing component 116 can compute a range, a bearing, and/or a velocity of a target in the operational environment of the sensor 100 based upon the radar data.

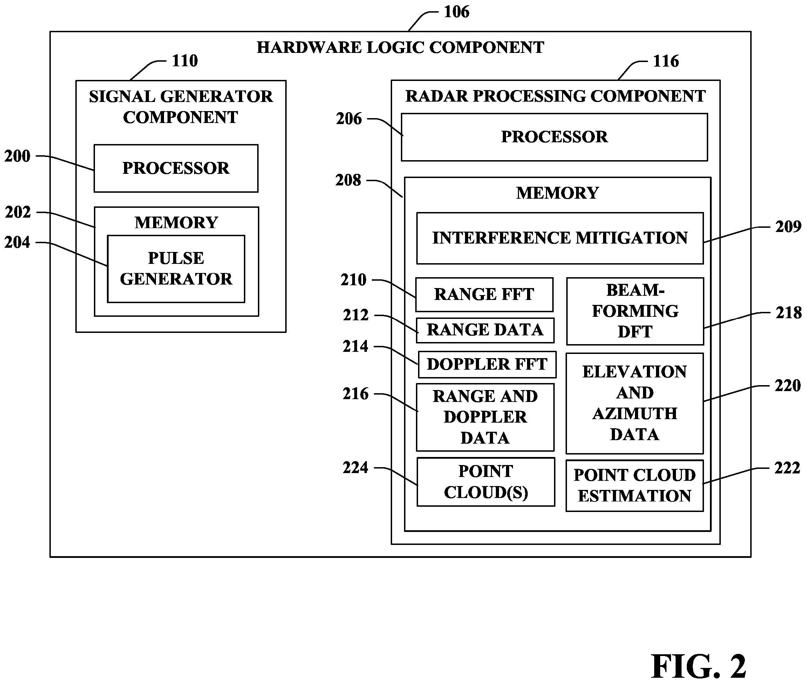

With reference now to Fig. 2, a more detailed view of the hardware logic component 106 is illustrated. The hardware logic component 106 comprises the signal generator component 110 and the radar processing component 116, as discussed with regard to Fig. 1. The signal generator component 110 comprises a processor 200 and a memory 202 configured to provide certain functionality as described herein. For example, the memory 202 can store computer-executable instructions that, when executed by the processor 200, cause the signal generator component 110 to perform certain acts. The memory 202 comprises a ramp/pulse generator component 204 that generates ramps/pulses (depending on the type of radar sensor system) for transmission. In one embodiment, the ramp/pulse generator component 204 performs time division multiplexing and/or frequency division multiplexing on the signals to be transmitted.

The radar processing component 116 comprises a processor 206 and a memory 208 configured to provide certain functionality as described herein. For example, the memory 208 can store computer executable instructions that, when executed by the processor 206, cause the radar processing component 116 to perform certain acts.

The memory 208 further comprises an interference mitigation component 209 that adjusts ADC samples affected by interference. The interference mitigation component 209 calculates a mean power variance (e.g., standard deviation) for ADC samples on a frame-by-frame basis or a ramp-by-ramp basis. A power threshold is set (e.g., as a multiple of the calculated mean power variance, or some other desired threshold value), and ADC samples having a power magnitude above the power threshold are adjusted or removed. In one embodiment, the adjustment comprises multiplying the identified sample's power magnitude by zero. In another embodiment, the adjustment comprises attenuating the sample's power magnitude down to the mean power for the frame or ramp. In another embodiment, the adjustment comprises removing the sample and reconstructing a replacement sample that has a power magnitude within the mean power variance for the frame or ramp.

In order to calculate the mean power variance on a ramp-by-ramp basis, the interference mitigation component 209 receives from the ADC the power magnitude for each sample in a given ramp and calculates the mean sample power for the samples in the given ramp by averaging the absolute values of the samples' power magnitudes. The interference mitigation component 209 also calculates the mean power variance for the given ramp. Once the mean power variance for the given ramp has been calculated, the interference mitigation component 209 applies a power threshold that is based on the mean power variance to samples in the ramp. The power threshold can be, for example, a multiple of the calculated mean power variance for the ramp. Samples that exceed the power threshold can be adjusted, e.g., by having their power magnitude multiplied by zero or in another manner as described herein.

Where interference mitigation is performed on a frame-by-frame basis, the interference mitigation component 209 averages the mean power variances of some or all of the ramps in a given frame to generate a mean power variance for the frame. Sample power magnitudes are compared to a power threshold that is based on the mean power variance of a given frame, and outliers are adjusted as described herein.

The memory 208 also comprises a range fast Fourier transform (FFT) component 210 that is executed on a digitized signal received from an ADC, such as the ADC 114 of Fig. 1, after interference mitigation by the interference mitigation component 209 to generate range data values 212 for objects detected in a received radar return. A Doppler FFT 214 is executed on the range values to generate range and Doppler data values 216. A discrete Fourier transform (DFT) 218 is then executed on the range and Doppler data values to generate elevation and azimuth data values 220. It will be understood that the described approach is not limited to using a DFT, but rather can employ any suitable direction of arrival (DoA) technique. A point cloud estimation component 222 is executed to generate one or more multi-dimensional point clouds 224 representing at least the range data values 212, the range and Doppler data values 216, and the elevation and azimuth data values 220.

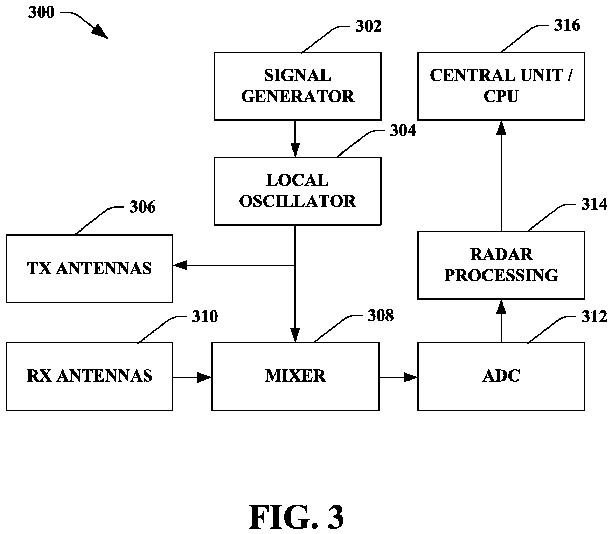

Fig. 3 shows another example of a radar sensor unit 300. In contrast to the embodiments described with regard to Figs. 1 and 2, where signal processing is performed at the radar unit, in the example of Fig. 3, signal processing at the radar sensor terminates with generation of the point clouds, which are then transmitted to a central processing unit or computer where they are processed further. The sensor 300 comprises a signal generator 302 that provides a signal to a local oscillator 304. The local oscillator 304 adjusts the signal for transmission via one or more transmit antennas 306. The local oscillator 304 also provides the transmit signal to a mixer 308, which combines the transmit signal with signals that have been reflected by an object and received by one or more receive antennas 310. The combined signal is then provided by the mixer 308 to an ADC 312, which digitizes the combined signal and provides the digitized signal to a radar processing component 314.

The radar processing unit 314 performs various acts on the digitized signal and provides functionality similar or identical to the functionality provided by the radar processing component 116 of the hardware logic component 106 (see, e.g., Figs. 1 and 2). The radar processing component 314 generates one or more multi-dimensional point clouds, which are then transmitted to a central processing unit 316 for additional processing.

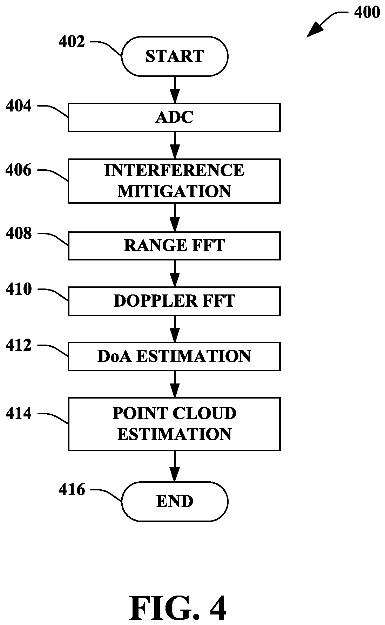

In one embodiment, the central processing unit 316 performs the processing steps described with regard to the radar processing component 116 of Fig. 2 and/or executes the methods of Figs. 4-5. In another embodiment, the central processing unit 316 receives raw radar data from a radar sensor and processes the raw data, including interference mitigation, to generate point clouds and provide the functionality described herein.

Fig. 4-5 illustrate exemplary methodologies relating to mitigating interference in raw radar signal data. While the methodologies are shown and described as being a series of acts that are performed in a sequence, it is to be understood and appreciated that the methodologies are not limited by the order of the sequence. For example, some acts can occur in a different order than is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodology can be stored in a computer-readable medium, displayed on a display device, and/or the like.

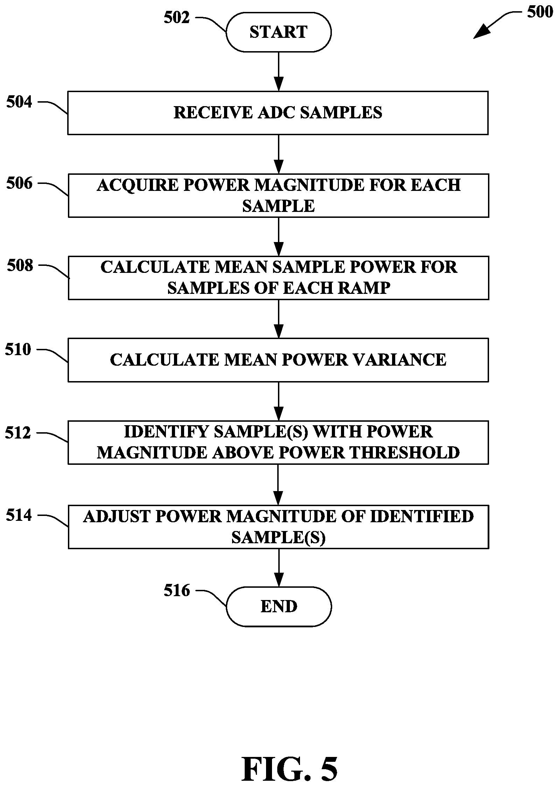

Turning now to Fig. 4, a methodology 400 is illustrated for generating a radar point cloud. At 402, the method begins. At 404, at a given radar sensor, analog to digital conversion is performed on signals received by the sensor. This step is performed for each array element (e.g., Tx/Rx pair) of the radar sensor. Once the received signals have been digitized, then at 406, interference mitigation is performed as described herein with regard to various aspects (see, e.g., Figs. 2 and 5, inter alia). At 408, a range fast Fourier transform is executed thereon to generate range data for the detected object. At 410, a Doppler FFT transform is executed on the range data in order to generate range and Doppler data. At 412, direction of arrival estimation is performed on the range and Doppler data to generate elevation and azimuth data. Direction of arrival estimation can be performed using, e.g., a beamforming technique, a discrete Fourier transform (DFT), or any other suitable technique. At 414, the range data, the range and Doppler data, and the elevation and azimuth data are used for point cloud estimation. The method terminates at 416.

Turning now to Fig. 5, a methodology 500 is illustrated for mitigating interference in raw radar signal data. The method begins at 502. At 504, ADC samples of ramps in a radar signal frame are received or otherwise acquired. At 506, a power magnitude for each ADC sample is acquired. At 508, mean ADC sample power for the ADC samples in each ramp is calculated. In one embodiment, mean ADC sample power for each ramp is calculated by averaging the absolute values of the power magnitudes of the ADC samples in the ramp, such that:

$$\text{mean ADC sample power} = \text{mean}(\text{abs}(\text{ADC sample})),$$

where "ADC sample" represents the power magnitude of respective ADC samples in the ramp.

At 510, mean power variance for each frame is calculated based on the mean sample powers of the ramps in the frame. In one embodiment, the mean power variance (linear variance) for each frame is calculated by averaging the absolute values of the difference between the absolute value of the power magnitude of each sample and the mean power magnitude for its ramp, such that:

$$\text{Variance} = \text{mean}(\text{abs}(\text{abs}(\text{ADC sample}) - \text{mean ADC sample power})).$$

At 512, samples having a power magnitude above a power threshold are identified. The power variance threshold may be, for example, a multiple of the mean power variance calculated for the frame, or some other desired value based on the mean power variance of the frame. At 514, power magnitudes of the identified samples are adjusted. The method terminates at 516.

In one embodiment, power magnitude adjustment includes multiplying the power magnitude value for the identified samples by zero. In another embodiment, power magnitude adjustment comprises attenuating the power magnitude of the identified samples. In yet another embodiment, power magnitude adjustment comprises removing the identified samples and replacing them with recreated sample values.

In another embodiment, the mean power variance is calculated for each ramp rather than each frame (i.e., a ramp-by-ramp basis), and the method proceeds accordingly with sample identification and power magnitude adjustment.

It will be understood that the methods of Figs. 4 and 5 can be performed by any of the systems and/or components of Figs. 1-3, 8-9, etc.

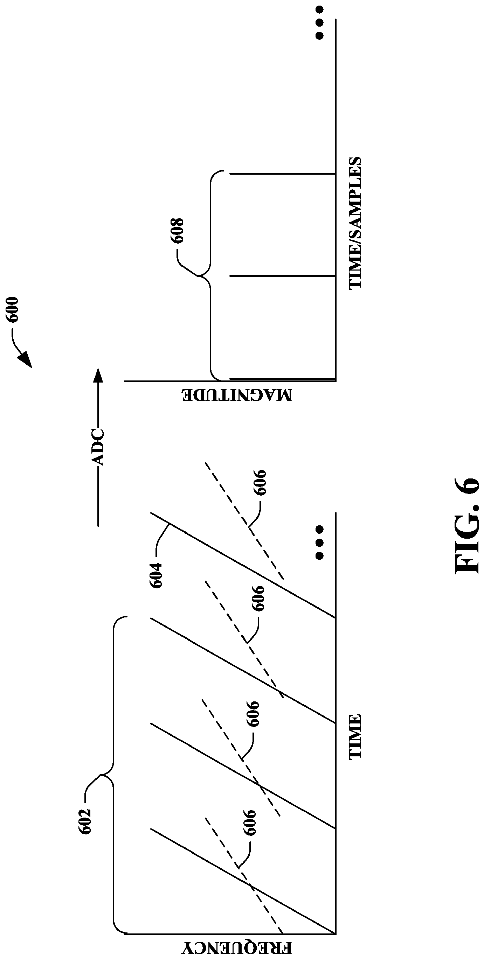

Fig. 6 illustrates a plurality of interfered ramps 602 and a non-interfered ramp 604. Interference between FMCW radar sensor systems that do not have the same ramp slope or PRI usually occurs in just a few samples of the signal (short part of the time during the transmission of a frame). However, when this interference occurs in a direct line at short distances, even a relatively few samples that suffer interference can deleteriously affect the performance of the radar sensor system. Interfering ramps 606 (e.g., from another radar sensor system) use the same frequency as the interfered ramps 602 where they cross the interfered ramps 602. During ADC sampling, samples taken at the crossing points will register a higher than expected power magnitude, as shown by the sample peaks 608. These samples can be identified and compensated using the techniques described herein.

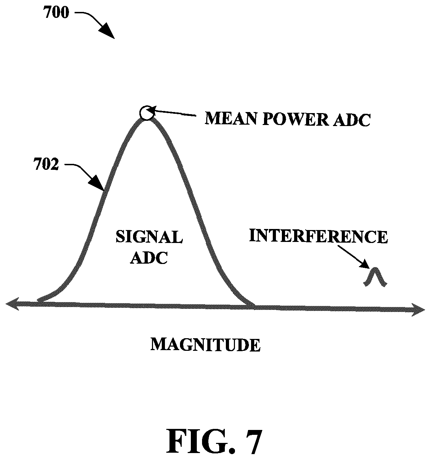

Fig. 7 illustrates a graphical representation 700 of power magnitude across ADC samples. The samples that suffer from interference can compromise the performance of the radar sensor system and have a much higher signal magnitude than the signal variance. In order to filter out the interference samples, the signal magnitude variance 702 of the frame's ADC signal is used to generate a power threshold that is applied to identify samples that have been subjected to interference. All signal samples with a magnitude much greater than the signal variance are removed or otherwise adjusted. Samples registering a power magnitude above the power threshold are removed (e.g., by multiplying the power magnitude by 0), or otherwise compensated, to avoid loss of radar performance. Using signal variance instead of absolute magnitude to filter the signal avoids the problem of inadvertently filtering out signals compromised by saturation or reflections from close/strong targets.

Saturation, strong targets (e.g., targets that reflect a large amount of signal) and interference in all bands and time cause an increase in mean magnitude and general variance across the entire radar spectrum. Therefore, the variance and the mean power of the whole frame are calculated, and only the samples with power levels above the power threshold are adjusted or removed. This threshold can be an absolute value or a ratio to estimated variance. In one embodiment, the mean variance calculation is performed per ramp instead of per frame.

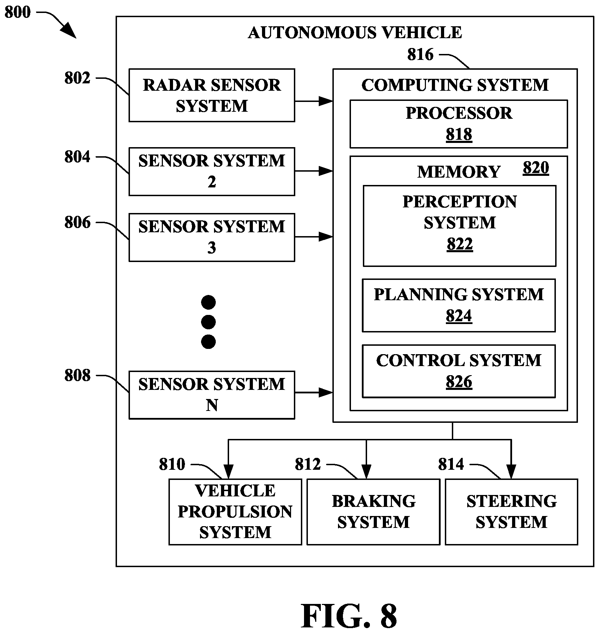

Various technologies described herein are suitable for use in connection with an autonomous vehicle (AV) that employs a radar sensor system to facilitate navigation about roadways. Referring now to Fig. 8, an exemplary AV 800 is illustrated, wherein the AV 800 can navigate about roadways without human conduction based upon sensor signals output by sensor systems of the AV 800. The AV 800 includes a plurality of sensor systems 802-808 (a first sensor system 802 through an Nth sensor system 808). The sensor systems 802-808 may be of different types. For example, the first sensor system 802 is a radar sensor system, the second sensor system 804 may be a LiDaR sensor system, the third sensor system 806 may be a camera (image) system, and the Nth sensor system 808 may be a sonar system. Other exemplary sensor systems include GPS sensor systems, inertial sensor systems, infrared sensor systems, and the like. The various sensor systems 802-808 are arranged about the AV 800. The sensor systems 802-808 are configured to repeatedly (e.g., continuously, or periodically) output sensor data that is representative of objects and conditions in the driving environment of the AV 800.

The AV 800 further includes several mechanical systems that are used to effectuate appropriate motion of the AV 800. For instance, the mechanical systems can include but are not limited to, a vehicle propulsion system 810, a braking system 812, and a steering system 814. The vehicle propulsion system 810 may be an electric engine, an internal combustion engine, or a combination thereof. The braking system 812 can include an engine brake, brake pads, actuators, a regenerative braking system, and/or any other suitable componentry that is configured to assist in decelerating the AV 800. The steering system 814 includes suitable componentry that is configured to control the direction of movement of the AV 800.

The AV 800 additionally comprises a computing system 816 that is in communication with the sensor systems 802-808 and is further in communication with the vehicle propulsion system 810, the braking system 812, and the steering system 814. The computing system 816 includes a processor 818 and memory 820 that includes computer-executable instructions that are executed by the processor 818. In an example, the processor 818 can be or include a graphics processing unit (GPU), a plurality of GPUs, a central processing unit (CPU), a plurality of CPUs, an application-specific integrated circuit (ASIC), a microcontroller, a programmable logic controller (PLC), a field programmable gate array (FPGA), or the like.

The memory 820 comprises a perception system 822, a planning system 824, and a control system 826. Briefly, the perception system 822 is configured to identify the presence of objects and/or characteristics of objects in the driving environment of the AV 800 based upon sensor data output by the sensor systems 802-808. The planning system 824 is configured to plan a route and/or a maneuver of the AV 800 based upon data pertaining to objects in the driving environment that are output by the perception system 822. The control system 826 is configured to control the mechanical systems 812-814 of the AV 800 to effectuate appropriate motion to cause the AV 800 to execute a maneuver planned by the planning system 824.

The perception system 822 is configured to identify objects in proximity to the AV 800 that are captured in sensor signals output by the sensor systems 802-808. By way of example, the perception system 822 can be configured to identify the presence of an object in the driving environment of the AV 800 based upon images generated by a camera system included in the sensor systems 804-808. In another example, the perception system 822 can be configured to determine a presence and position of an object based upon radar data output by the radar sensor system 802. In exemplary embodiments, the radar sensor system 802 can be or include the radar sensor 100 and/or 300. In such embodiments, the perception system 822 can be configured to identify a position of an object in the driving environment of the AV 800 based upon the estimated range output by the radar sensor 100 and/or 300.

The AV 800 can be included in a fleet of AVs that are in communication with a common server computing system. In these embodiments, the server computing system can control the fleet of AVs such that radar sensor systems of AVs operating in a same driving environment (e.g., within line of sight of one another, or within a threshold distance of one another) employ different pulse sequence carrier frequencies. In an exemplary embodiment, a radar sensor system of a first AV can be controlled so as not to transmit pulse sequences having same center frequencies as pulse sequences transmitted by a radar sensor system of a second AV at the same time. In further embodiments, the radar sensor system of the first AV can be controlled to transmit pulse sequences in a different order than a radar sensor system of a second AV. For instance, the radar sensor system of the first AV can be configured to transmit a set of pulse sequences at four different center frequencies A, B, C, and D in an order A, B, C, D. The radar sensor system of the second AV can be configured to transmit pulse sequences using a same set of center frequencies in a frequency order B, A, D, C. Such configurations can mitigate the effects of interference when multiple AVs that employ radar sensor systems are operating in a same driving environment.

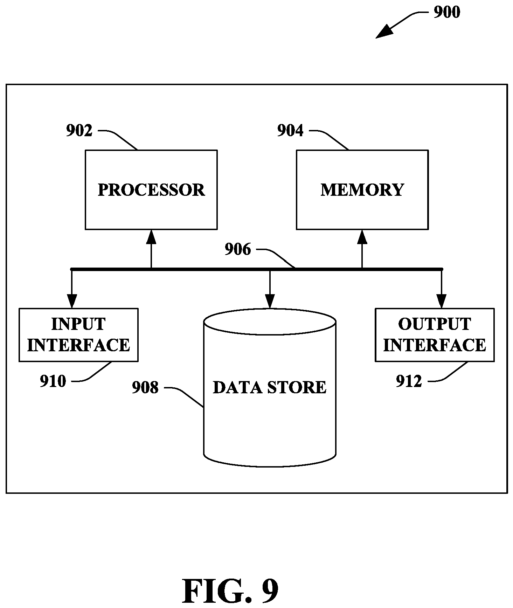

Referring now to Fig. 9, a high-level illustration of an exemplary computing device 900 that can be used in accordance with the systems and methodologies disclosed herein is illustrated. For instance, the computing device 900 may be or include the computing system 816. The computing device 900 includes at least one processor 902 that executes instructions that are stored in a memory 904. The instructions may be, for instance, instructions for implementing functionality described as being carried out by one or more modules, components, or systems discussed above or instructions for implementing one or more of the methods described above. The processor 902 may be a GPU, a plurality of GPUs, a CPU, a plurality of CPUs, a multi-core processor, a combination of the foregoing, etc. The processor 902 may access the memory 904 by way of a system bus 906. In addition to storing executable instructions, the memory 904 may also store radar data, beamformed radar data, neural network configurations, etc.

The computing device 900 additionally includes a data store 908 that is accessible by the processor 902 by way of the system bus 906. The data store 908 may include executable instructions, radar data, beamformed radar data, embeddings of these data in latent spaces, etc. The computing device 900 also includes an input interface 910 that allows external devices to communicate with the computing device 900. For instance, the input interface 910 may be used to receive instructions from an external computing device, etc. The computing device 900 also includes an output interface 912 that interfaces the computing device 900 with one or more external devices. For example, the computing device 900 may transmit control signals to the vehicle propulsion system 810, the braking system 812, and/or the steering system 814 by way of the output interface 912.

Additionally, while illustrated as a single system, it is to be understood that the computing device 900 may be a distributed system. Thus, for instance, several devices may be in communication by way of a network connection and may collectively perform tasks described as being performed by the computing device 900.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include FPGAs, ASICs, Application-specific Standard Products (ASSPs), SOCs, Complex Programmable Logic Devices (CPLDs), etc.

Described herein are various technologies according to at least the following examples.

(A1) In an aspect, a method performed by a radar sensor system includes receiving analog-to-digital converted (ADC) samples of a received radar signal. The method also includes identifying power magnitudes for the ADC samples. The method further includes calculating a mean power value for ADC samples in a given ramp of the received radar signal. Additionally, the method includes calculating a mean power variance of the ADC samples in the given ramp. Moreover, the method includes identifying an ADC sample having a power magnitude above a power threshold. The method also includes adjusting the power magnitude of the identified ADC sample.

(A2) In some embodiments of the method of (A1), the power threshold is a multiple of the mean power variance.

(A3) In some embodiments of the method of at least one of (A1)-(A2), the radar signal comprises a plurality of ramps, and the method further includes, on a per-sample basis, calculating a difference between the absolute value of the power magnitude of a given ADC sample and the mean power magnitude for the ramp from which the given ADC sample was taken. The method also includes calculating the mean power variance by averaging the absolute values of the calculated differences.

(A4) In some embodiments of the method of (A3), the radar signal comprises a plurality of frames comprising ramps, and the acts further include calculating the mean power variance by averaging the mean power variances of ramps in a given frame.

(A5) In some embodiments of the method of at least one of (A1)-(A4), adjusting the power magnitude of the identified sample comprises multiplying the identified sample power magnitude by zero.

(A6) In some embodiments of the method of at least one of (A1)-(A5), adjusting the power magnitude of the identified sample comprises attenuating the identified sample power magnitude to a level within the mean power variance for the ramp from which the identified sample was taken.

(A7) In some embodiments of the method of at least one of (A1)-(A6), the method further includes generating a point cloud using the ADC samples and the adjusted ADC sample.

(B1) In another aspect, a radar system is configured to perform at least one of the methods disclosed herein (e.g., any of the methods of (A1)-(A7)).

(C 1) In yet another aspect, a radar system includes a hardware logic component (e.g., circuitry), where the hardware logic component is configured to control elements of a radar system to perform at least one of the methods disclosed herein (e.g., any of the methods of (A1)-(A7)).

(D1) In yet another aspect, a radar sensor system includes a receive antenna that receives a radar return; and circuitry configured to perform certain acts. The acts include receiving analog-to-digital converted (ADC) samples of a received radar signal. The acts also include identifying power magnitudes for the ADC samples. The acts further include calculating a mean power value for ADC samples in a given ramp of the received radar signal. Additionally, the acts include calculating a mean power variance of the ADC samples in the given ramp. The acts also include identifying a sample having a power magnitude above a power threshold. The acts further include adjusting the power magnitude of the identified sample.

(D2) In some embodiments of the radar sensor system of (D1), the power threshold is a multiple of the mean power variance.

(D3) In some embodiments of the radar sensor system of at least one of (D1)-(D2), the radar signal comprises a plurality of ramps, and the acts further include, on a per-sample basis, calculating a difference between the absolute value of the power magnitude of a given ADC sample and the mean power magnitude for the ramp from which the given ADC sample was taken. The acts also include calculating the mean power variance by averaging the absolute values of the calculated differences.

(D4) In some embodiments of the radar sensor system of (D3), the radar signal comprises a plurality of frames comprising ramps, and the acts further include calculating the mean power variance by averaging the mean power variances of ramps in a given frame.

(D5) In some embodiments of the radar sensor system of at least one of (D1)-(D4), adjusting the power magnitude of the identified sample comprises multiplying the identified sample power magnitude by zero.

(D6) In some embodiments of the radar sensor system of at least one of (D1)-(D5), adjusting the power magnitude of the identified sample comprises attenuating the identified sample power magnitude to a level within the mean power variance for the ramp from which the identified sample was taken.

(D7) In some embodiments of the radar sensor system of at least one of (D1)-(D6), the acts further include generating a point cloud using the ADC samples and the adjusted ADC sample.

(E1) In another aspect, a hardware logic component includes one or more processors configured to perform certain acts, the acts including receiving analog-to-digital converted (ADC) samples of a received radar signal. The acts further include identifying power magnitudes for the ADC samples. The acts also include calculating a mean power value for ADC samples in a given ramp of the received radar signal. Additionally, the acts include calculating a mean power variance of the ADC samples in the given ramp. Moreover, the acts include identifying a sample having a power magnitude above a power threshold. The acts also include adjusting the power magnitude of the identified sample.

(E2) In some embodiments of the hardware logic component of (E1), the power threshold is a multiple of the mean power variance.

(E3) In some embodiments of the hardware logic component of at least one of (E1-E2), the radar signal comprises a plurality of ramps, and the acts further include, on a per-sample basis, calculating a difference between the absolute value of the power magnitude of a given ADC sample and the mean power magnitude for the ramp from which the given ADC sample was taken. The acts also include calculating the mean power variance by averaging the absolute values of the calculated differences.

(E4) In some embodiments of the hardware logic component of (E3), radar signal comprises a plurality of frames comprising ramps, and the acts further include calculating the mean power variance by averaging the mean power variances of ramps in a given frame.

(E5) In some embodiments of the hardware logic component of at least one of (E1)-(E4), adjusting the power magnitude of the identified sample comprises multiplying the identified sample power magnitude by zero.

(E6) In some embodiments of the hardware logic component of at least one of (E1)-(E5), adjusting the power magnitude of the identified sample comprises attenuating the identified sample power magnitude to a level within the mean power variance for the ramp from which the identified sample was taken.

(F1) In still yet another aspect, use of any of the radar systems (e.g., any of (B1), (C 1), (D1)-(D7) or (E1-E6)) to detect and classify a target is contemplated.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**Claims**

1. A method performed by a radar sensor system, the method comprising:

   receiving analog-to-digital converted (ADC) samples of a received radar signal;
   identifying power magnitudes for the ADC samples;
   calculating a mean power value for ADC samples in a given ramp of the received radar signal;
   calculating a mean power variance of the ADC samples in the given ramp;
   identifying an ADC sample having a power magnitude above a power threshold; and
   adjusting the power magnitude of the identified ADC sample.

2. The method of claim 1, wherein the power threshold is a multiple of the mean power variance.

3. The method of any one of claims 1-2, wherein the radar signal comprises a plurality of ramps, and further comprising:

   on a per-sample basis, calculating a difference between the absolute value of the power magnitude of a given ADC sample and the mean power magnitude for the ramp from which the given ADC sample was taken; and
   calculating the mean power variance by averaging the absolute values of the calculated differences.

4. The method of claim 3, wherein the radar signal comprises a plurality of frames comprising ramps, and further comprising calculating the mean power variance by averaging the mean power variances of ramps in a given frame.

5. The method of any one of claims 1-4, wherein adjusting the power magnitude of the identified sample comprises multiplying the identified sample power magnitude by zero.

6. The method of any one of claims 1-5, wherein adjusting the power magnitude of the identified sample comprises attenuating the identified sample power magnitude to a level within the mean power variance for the ramp from which the identified sample was taken.

7. The method of any one of claims 1-6, further comprising generating a point cloud using the ADC samples and the adjusted ADC sample.

8. A radar sensor system comprising:

a receive antenna that receives a radar return; and
circuitry configured to perform acts comprising:

receiving analog-to-digital converted (ADC) samples of a received radar signal;
identifying power magnitudes for the ADC samples;
calculating a mean power value for ADC samples in a given ramp of the received radar signal;
calculating a mean power variance of the ADC samples in the given ramp;
identifying a sample having a power magnitude above a power threshold; and
adjusting the power magnitude of the identified sample.

9. The radar sensor system of claim 8, wherein the power threshold is a multiple of the mean power variance.

10. The radar sensor system of any one of claims 8-9, wherein the radar signal comprises a plurality of ramps, the acts further comprising;

on a per-sample basis, calculating a difference between the absolute value of the power magnitude of a given ADC sample and the mean power magnitude for the ramp from which the given ADC sample was taken; and
calculating the mean power variance by averaging the absolute values of the calculated differences.

11. The radar sensor system of claim 10, wherein the radar signal comprises a plurality of frames comprising ramps, the acts further comprising calculating the mean power variance by averaging the mean power variances of ramps in a given frame.

12. The radar sensor system of any one of claims 8-11, wherein adjusting the power magnitude of the identified sample comprises multiplying the identified sample power magnitude by zero.

13. The radar sensor system of any one of claims 8-12, wherein adjusting the power magnitude of the identified sample comprises attenuating the identified sample power magnitude to a level within the mean power variance for the ramp from which the identified sample was taken.

14. The radar sensor system of any one of claims 8-13, the acts further comprising generating a point cloud using the ADC samples and the adjusted ADC sample.

15. The radar sensor system of any one of claims 8-14, employed in an autonomous vehicle.

**FIG. 1**

FIG. 2

FIG. 3

400

402 — START

404 — ADC

406 — INTERFERENCE
MITIGATION

408 — RANGE FFT

410 — DOPPLER FFT

412 — DoA ESTIMATION

414 — POINT CLOUD
ESTIMATION

416 — END

# FIG. 4

502 — START — 500

504 — RECEIVE ADC SAMPLES

506 — ACQUIRE POWER MAGNITUDE FOR EACH SAMPLE

508 — CALCULATE MEAN SAMPLE POWER FOR SAMPLES OF EACH RAMP

510 — CALCULATE MEAN POWER VARIANCE

512 — IDENTIFY SAMPLE(S) WITH POWER MAGNITUDE ABOVE POWER THRESHOLD

514 — ADJUST POWER MAGNITUDE OF IDENTIFIED SAMPLE(S)

516 — END

# FIG. 5

**FIG. 6**

EP 4 549 989 A1

700

702

MEAN POWER ADC

SIGNAL
ADC

INTERFERENCE

MAGNITUDE

# FIG. 7

**FIG. 8**

EP 4 549 989 A1

900

PROCESSOR — 902

MEMORY — 904

906

INPUT INTERFACE — 910

DATA STORE — 908

OUTPUT INTERFACE — 912

**FIG. 9**

Europäisches
Patentamt
European
Patent Office
Office européen
des brevets

# EUROPEAN SEARCH REPORT

Application Number

**EP 23 20 6794**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/242972 A1 (MELZER ALEXANDER [AT] ET AL) 8 August 2019 (2019-08-08) * abstract; figures 1-7, 17, 18 * * paragraphs [0001], [0002], [0042], [0050], [0053], [0058], [0059], [0062], [0069], [0070], [0071] * | 1-15 | INV. G01S7/02 G01S13/931 G01S7/35 G01S13/34 |
| X | EP 4 227 705 A1 (NXP BV [NL]) 16 August 2023 (2023-08-16) * abstract; claim 8; figures 2, 5, 7 * * paragraphs [0001], [0002], [0010], [0027], [0046], [0056], [0075], [0089] * | 1,8,15 | ADD. G01S13/42 G01S13/58 |
| A | EP 2 912 488 B1 (VALEO SCHALTER & SENSOREN GMBH [DE]) 11 December 2019 (2019-12-11) * abstract; figures 2-4 * * paragraphs [0015] - [0019], [0043] - [0046], [0050] - [0052], [0063] - [0065] * | 1-15 | |
| A | EP 1 059 541 A2 (DELPHI TECH INC [US]) 13 December 2000 (2000-12-13) * abstract; claims 1, 2; figures 1, 2, 4 * * paragraphs [0001], [0003], [0007], [0010] - [0012], [0019] * | 1-15 | TECHNICAL FIELDS SEARCHED (IPC) G01S |

The present search report has been drawn up for all claims

| Place of search | Date of completion of the search | Examiner |
|---|---|---|
| Munich | 16 April 2024 | Lupo, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 549 989 A1**

## ANNEX TO THE EUROPEAN SEARCH REPORT
## ON EUROPEAN PATENT APPLICATION NO.

**EP 23 20 6794**

This annex lists the patent family members relating to the patent documents cited in the above-mentioned European search report.
The members are as contained in the European Patent Office EDP file on
The European Patent Office is in no way liable for these particulars which are merely given for the purpose of information.

**16-04-2024**

| Patent document cited in search report | | | Publication date | Patent family member(s) | | | Publication date |
|---|---|---|---|---|---|---|---|
| US 2019242972 | A1 | | 08-08-2019 | CN | 110133602 | A | 16-08-2019 |
| | | | | DE | 102018102816 | B3 | 04-07-2019 |
| | | | | KR | 20190096291 | A | 19-08-2019 |
| | | | | US | 2019242972 | A1 | 08-08-2019 |
| EP 4227705 | A1 | | 16-08-2023 | EP | 4227705 | A1 | 16-08-2023 |
| | | | | US | 2023251348 | A1 | 10-08-2023 |
| EP 2912488 | B1 | | 11-12-2019 | DE | 102012021239 | A1 | 30-04-2014 |
| | | | | EP | 2912488 | A1 | 02-09-2015 |
| | | | | WO | 2014063867 | A1 | 01-05-2014 |
| EP 1059541 | A2 | | 13-12-2000 | EP | 1059541 | A2 | 13-12-2000 |
| | | | | US | 6094160 | A | 25-07-2000 |

EPO FORM P0459